# EUROPEAN PATENT SPECIFICATION

(11) **EP 2 710 780 B1**
(45) Date of publication and mention of the grant of the patent: **17.04.2019**
(21) Application number: 12722809.6
(22) Date of filing: 15.05.2012
(51) Int. Cl.: H04L 29/06, G06F 21/00, G06F 17/30, G06F 21/56, G06F 21/62

(54) **NETWORK ACCESS CONTROL SYSTEM AND METHOD**
NETZWERKZUGANGSSTEUERUNGSSYSTEM UND -VERFAHREN
SYSTÈME ET PROCÉDÉ DE CONTRÔLE DE L'ACCÈS À UN RÉSEAU

(30) Priority: 16.05.2011 GB 201108068
(43) Date of publication of application: 26.03.2014
(73) Proprietor: Wiscol Limited, London N12 0BP (GB)
(72) Inventor: KAUFMANN, Grant David, London, Greater London WC1A 1DG (GB)
(74) Representative: London IP Ltd
(86) International application number: PCT/GB2012/051074
(87) International publication number: WO 2012/156720

(56) References cited:
- WO-A2-2008/109866
- US-A1- 2003 014 659
- US-A1- 2004 128 156
- US-A1- 2006 048 218
- US-A1- 2010 077 444

## Description

### FIELD OF THE INVENTION

The present invention relates to network communication and access security. It particularly relates to preventing access to undesirable material and data.

### THE PRIOR ART

Problems with unwanted and malicious material on the Internet and in communications networks in general are not new. Emails and website traffic are known to carry Spam (unwanted communications offering dubious products, services or social possibilities) as perhaps the lowest level problem. Phishing communications, where a thief seeks bank details to be unwittingly supplied by message respondents are also not the most malicious things that happen. Email attachments and elements of Internet site content can carry automatically installing so-called "malware" which can range from "spy ware", which keeps track of computer activity and reports back to a sender such things as bank details and password keystrokes, to full computer crippling viruses which can disable all anti-viral protection and damage and destroy programs and files. Perhaps even worse, insidiously introduced malware can "robotize" a recipient computer to do the bidding of a remote master computer and send, on the master's behalf, spam emails and further robotizing attacks to email addresses found in victim computer email address books. The present invention seeks to make a computer more protected from receiving malware.

On board processor precautions abound against malware. Numerous applications are available, to be installed in a computer, offering antiviral, anti-spy ware and firewall facilities. Though such precautions are generally effective, effectiveness is not always maintained. For example, one has only to run an anti-spy ware application to discover that numerous infections can exist without apparent impairment to operation of the computer. When some malware is opened, the existing anti-malware precautions are automatically disabled, making a mockery of the attempted safekeeping of the now infected processor. The present inventing seeks to improve upon malware protection and to prevent or make less likely initial malware infection.

Certain websites carry a risk to any visitor. Malware is downloaded without the operator's knowledge or consent by criminal and state enterprises. Such downloading is also a feature of so called cyber attacks. The present invention seeks to make less likely a visit to a risky website.

Precautions can rapidly fall out of date. An infection to a processor can occur within hours of its first appearing in the World, and before most processors have had a chance to update their precautions. The present invention seeks to make it possible that updated precautions are automatically available and applied within the shortest possible lapse of time.

Prior art solutions have been suggested in patent documents.

United States patent application US2006048218 (A1) discloses a system and method for an end user to change the operation of a data flow filter mechanism, such as a firewall, that operates to control data flows between a plurality of protected computing devices and one or more non-protected computing devices. With the system and method, an administrator of a sub-network of computing devices may set a client computing device's scope of rules/policies that may be changed by a user of the client computing device, with regard to a data flow filter mechanism. The user of the client computing device, or the client computing device itself, may then log onto the data flow filter mechanism and modify the operation of the data flow filter mechanism within the limits established by the administrator. The present invention seeks to limit the client options.

International patent application WO2008109866 (A2) discloses methods, devices, systems and computer program products afor controlling access to services, content, applications and the like on a wireless communication device. In one aspect, wireless communication device-wide access control is provided such that unified access control may exist on the device; providing access control to more than one, and in some instances all, of the services and/or applications that are accessible on the device. Additionally, aspects provide for limiting or prohibiting access based on numerous access control factors, such as content type, service type, location of the device, time or any other device environmental characteristic. The methods, devices, systems and computer program products for content access control may be executed on the wireless communication device or they may be executed within the wireless network. The present invention seeks to simplify control and access speed by avoiding need for content assesseent.

### SUMMARY OF INVENTION

According to a first aspect, the present invention provides a system for controlling network content to be accessed by a client, the system comprising an administrator setting access rules and policies to be followed by the client, characterised by:
the client 10, being operable to make network access requests to a resource in a network 12;
the client 10 being operable to access a network access server 14 in the network 12 to set up a network access profile;
the client 10 being operable to access at least one trusted network site 16 in the network to set up at least one trusted site profile;
the client 10 being operable to pass the network access request to the network access serve 14;
the network access server 14 comprising a combining engine 20 operable, upon receipt of the network access request, to combine the network access profile with the at least one trusted site profile to form a combined profile;
and
the network access server 14 also comprising a filtering engine operable to test the network access request and to allow access to the resource only if the combined profile is not violated.

According to a second aspect, the present invention provides a method for controlling network resource 18 content access by a client, the system comprising an administrator setting access rules and policies to be followed by the client, characterised by: ;
a step of accessing a network access controller 14 in the network 12 and establishing a network access profile;
a step of accessing at least one trusted site 16 in the network 12 and establishing at least one trusted site profile
a step of issuing a network access request to the network access controller 14 ;
a step of the network access controller 14 combining the network access profile and the at least one trusted site 16 profile; and
a step of the network access controller 14 allowing the network resource access request if and only if the combined profile is not violated.

The invention further provides that the at least one trusted site profile can be updatable at the at least one trusted site; and that the at least one trusted site profile is transferable from the at least one trusted site to the network access server in response to receipt of a network access request.

The invention further provides that the network access request can include client data enabling identification of the client by the network access server.

The invention further provides that the network access server can pass the client data to the at least one trusted site, that the at least one trusted site can employ the client data to retrieve the associated trusted site profile, and that the at least one trusted site can pass the associated trusted site profile to the network access server.

The invention also provides that the at least one trusted site profile can include at least one of: the identity of network addresses; IP ports; content; time of day it is permitted to access; and the identity of network addresses; IP ports; content; and time of day it is forbidden to access.

### BRIEF DESCRIPTION OF THE DRAWINGS

The invention is further described and explained, by way of example, by the following description, to be read in conjunction with the appended drawings, in which
Figure 1 shows a schematic diagram illustrating a first phase of operation of a system of elements through which the invention is implemented.
Figure 2 shows showing a second phase of operation of the system of elements through which the invention is implemented
Figure 3 shows a schematic block diagram of exemplary elements of one possible implementation of the network access server of Figures 1 and 2.
Figure 4 shows an exemplary flow chart illustrating one of many possible manners in which the client can set up the client server option prior to use of the network access server to communicate with the network.
Figure 5 is an exemplary flow chart illustrating one possible way in which a client 10 can select trusted client options supplied by the trusted site 16.
   and
Figure 6 is a flow chart illustrating one possible way in which a client can access the network access server and the trusted site

### DETAILED DESCRIPTION OF THE INVENTION.

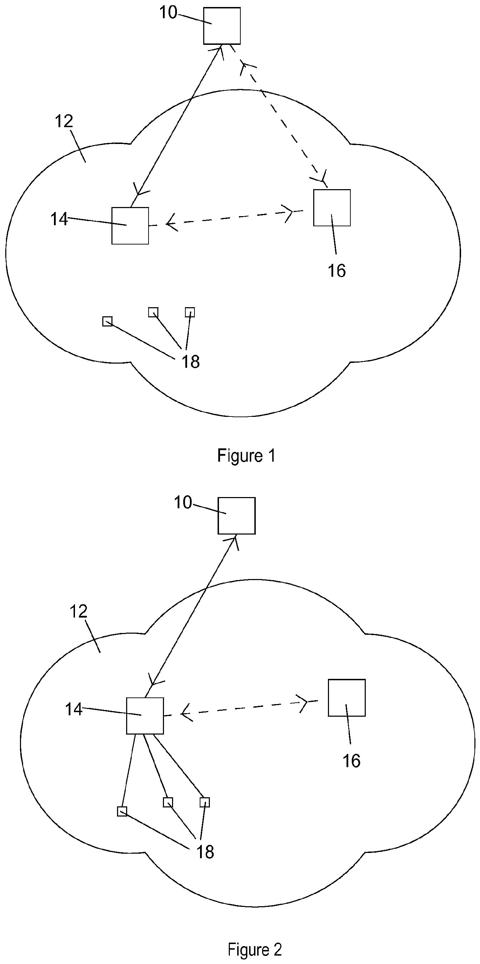

Attention is first drawn to Figure 1, a schematic diagram illustrating a first phase of operation of a system of elements through which the invention is implemented, and to Figure 2, showing a second phase of operation.

A client processor 10, such as a Personal Computer (PC), is network enabled and can operate with sites and services provided in a network 12 such as, but not limited to, the Internet. The client 10 can also be a portable device capable of internet access by WiFi® or mobile telephone systems.

Within the network 12 is a network access server 14. The client 10 can access the network access server by addressing the IP address of the network access server 14.

Also within the network 12 is a trusted site 16 containing selectable and configurable profiles for controlling the network access capability of the client 10 when the client, as will be explained, employs the network access server 14 to access other desirable sites 18.

Two phases of operation are involved.

The first phase is setup, where the client 10 accesses first the network access server 14 to set up client server options, and the client 10 also access the trusted site 16 to set up client trusted site options. As illustrated in Figure 1, the trusted site 16 and the network access sever 14 can communicate with each other to indicate to the network access server 14 which trusted site 16 is to be accessed and vice versa.

The second phase is operation, as illustrated by Figure 2, where the client 10 accesses the network access server 14 to access the desired sites 18 through the network access server 14 using the combination of the client server options and the client trusted site options. During the second phase of operation, the trusted site 16 and the network access server 14 communicate to convey the client trusted site option to the network access server 14 for use therein.

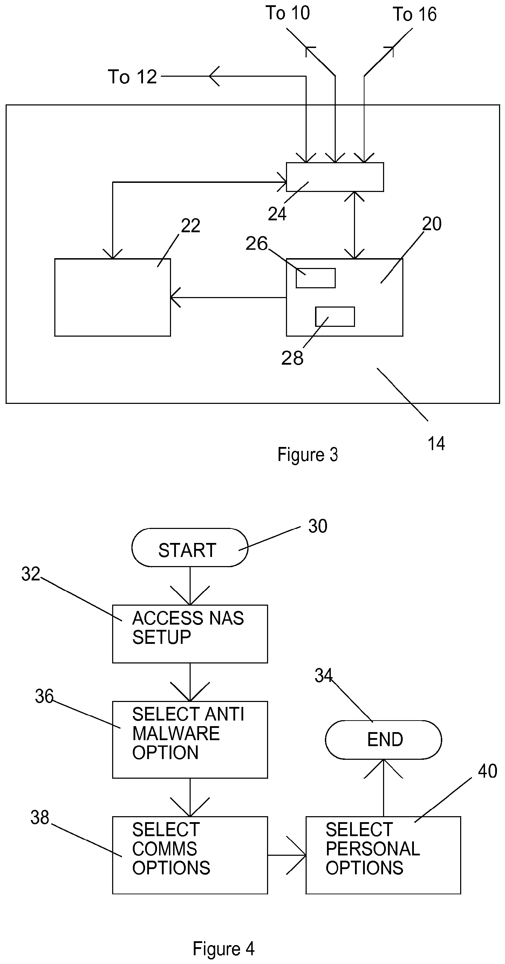

Attention is next drawn to Figure 3, a schematic block diagram of exemplary elements of one possible implementation of the network access server 14 of Figures 1 and 2.

The network access server 14 comprises a combining engine 20 and a filtering engine. The network access server 14 also comprises digital communication means 24 which can include, but is not restricted to, a modem operable to send and receive data and requests through the network 12 to access the client 10, the trusted site 16, and any other site in the network 12 which the client 10 may wish to contact. Although Figure 3 shows only one communication means 24, it is to be understood that two or more communication means 24 may be employed to provide the function of the network access server and here before and here after described and claimed. Communication means can also include a network connection.

The network access server also comprises at least two memories, a client memory 26 and a trusted site memory 28. The client memory 26 stores client identification, together with the client server options set up by the client 10. The trusted site memory stores the trusted site details, including the trusted site 16 identity and the trusted site setup details, which will be expanded upon hereafter.

Attention is next drawn to Figure 4 which shows an exemplary flow chart illustrating one of many possible manners in which the client 10 can set up the client server option prior to use of the network access server 14 to communicate with the network 12.

From a start 30 a first operation 32 has the client 10 access the setup interface of the network access server (NAS) 14 and verify their identity by, for example, client 10 IP address or any automatic machine identity label, such as a Mac number, which may be available, the automatic identifiers being useable either singly or collectively. The client 10 can also be asked to provide a password and other personal information. If the first operation finds that the client 10 is unknown to the network access server 14, the client can be required to set up an account and to provide suitable individual password information. Of course, if the client 10 declines to setup an account, the first operation 32 can proceed directly to exit 34, thereby allowing the client 10 to try again if the rejection was due to some fault of information.

If the first operation 32 is successful, a second operation 36 then selects the anti malware option desired by the client 10. Use of an anti malware option, resident in the network access server 14, gives the advantage to the client 10 that the anti malware option is always up to date and only derived from a reliable source. The user of the client 10 selects which of one or more anti malware resident programs the user wishes to employ. Malware can range from spy ware, viruses, robotizing programs and obnoxious cookies, to name but a few. The user of the client 10 can also elect to override the malware option and to employ no malware option in the network access server 14 but rather to use anti malware options installed within the client 10 itself.

A third operation 38 then selects any communications option that the user of the client 10 may elect to avoid. For example, WiFi communication can be subject to eavesdropping as can be telephone networks. As an example, the user of the client 10 may elect to be limited to hardwired communication. Certain protocols can contain malicious content, for example, certain types of images. The user of the client 10 may elect to avoid particular file types and protocols.

The third operation 38 complete, a fourth operation 40 then has the user of the client 10 select any personal options, such as, for example, any email addresses the user does not care to commutate with, any websites the user wishes to avoid, any type of email the user wishes not to receive, and so on. Personal options can be many and varied.

When the fourth operation 40 is complete, the client server option setup is complete. The process leaves by exit 34. The client server options are stored in the client memory 26 ready to be used when the client 10 attempts network access. The client server options can be updated at any time. Updating can be elected by the user of the client 10. One option is to have account setup and updating possible only under administrator control so that a client, typically in an organization, can be set up so that individual users cannot change the settings and a uniformity of settings can be achieved across an organization.

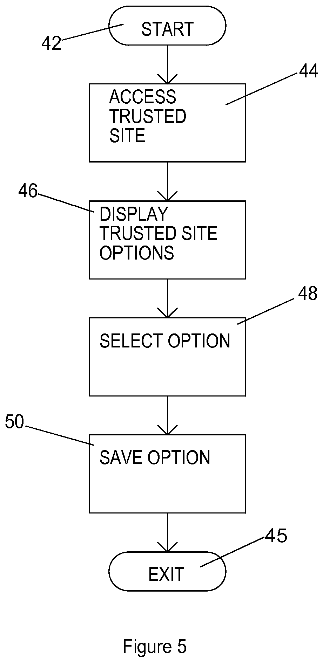

Attention is next drawn to Figure 5, an exemplary flow chart illustrating one possible way in which a client 10 can select trusted client options supplied by the trusted site 16.

From start 42 a fifth operation 44 has the client 10 access the trusted site 16 setup page. As with the client server option setup, as described above, the client 10 can be required to verify their identity by, for example, client 10 IP address or any automatic machine identity label, such as a Mac number, which may be available, the automatic identifiers being useable either singly or collectively. The client 10 can also be asked to provide a password and other personal information. If the fifth operation 44 finds that the client 10 is unknown to the trusted site 16, the client 10 can be required to set up an account and to provide suitable individual password information. Of course, if the client 10 declines to setup an account, the fifth operation can proceed directly to exit 45, thereby allowing the client 10 to try again if the rejection was due to some fault of information. Access to the trusted site may be restricted to a set of trusted organizations that may be required to verify their identity.

A sixth operation then has the trusted site 16 display the trusted site options available.

These may be, for example, sites which, in the view of a particular organization, are acceptable for client access, and may include many options depending upon the function of the particular client 10 machine. If, for example, the client 10 is to be used for a warehouse operation, only network 12 sites apt for viewing from a warehouse operation would be permitted. Other options can, but are not limited to, include accountancy appropriate sites, engineering appropriate sites, and so on.

The trusted site options can also include, but are not limited to, exclusion of risky sites, where malware or other problems have been encountered.

The trusted site options can also include, but are not limited to, exclusion of timewaster sites, access to which can provide social, gaming or entertainment activity to the detriment of employment related use.

The trusted site options can also include exclusion of access to sites which are considered morally, politically or religiously unsuitable. This exclusion is apt for regulating Internet activity of young persons and school pupils.

The trusted site options can involve a so-called "White List" of all those sites to which access is allowed. Alternatively, the trusted site options can include a listing of sites to which no access is allowed. As a second alternative, the trusted site options can include a combination of sites to which access is allowed together with sites to which access is denied. This last feature has the technical advantage of preventing access by link clicking from a permitted site to a non permitted site.

The sixth operation 46 is followed by a seventh operation 48 where the client 10 selects from among the trusted site options displayed in the fifth operation 46. The client 10 can select just one trusted site option, or can select two or more selected site options which can be applied together.

An eighth operation 50 then stores the selected trusted site option or options for later selection and application by identification of the particular client 10 and calling up of the stored option or options. The process then exits by way of exit 45.

The trusted site options can be updated at any time. Updating can be elected by the user of the client 10. One option is to have account setup and updating possible only under administrator control so that a client, typically in an organization, can be set up so that individual users cannot change the settings and a uniformity of settings can be achieved across an organization.

The particular content of a trusted site option can also be updated by a supplying organization. When logging on to the network access server 14, as will be later explained, this provides the technical advantage of always providing the most up to date version of the trusted site option or options to the selecting client 10.

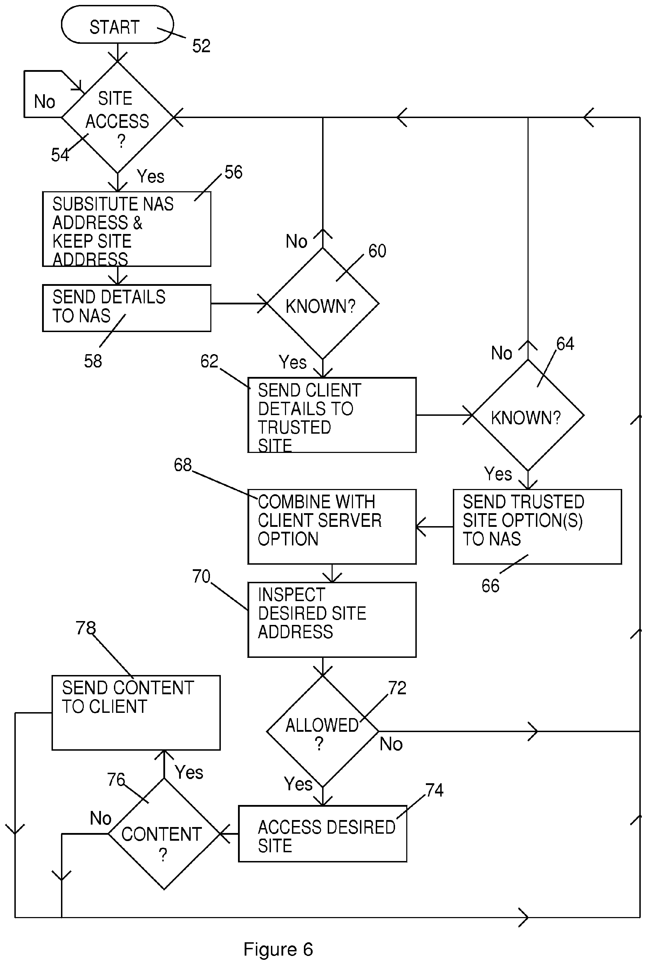

Attention is next drawn to Figure 6, a flow chart illustrating one possible way in which a client 10 can access the network access server 14. Figure 6 shows in part the activity of client 10, in part the activity of the network access server 14 and in part the activity of the trusted site 16.

From start 52, if a first test 54 detects that the client 10 seeks access to a desired website or internet service, in this example by means of use of a browser, and the client is equipped to utilize the present invention, a ninth operation 56 substitutes the web address of the network access server 14 in place of the desired address and retains and passes on the desired address and the client identifying details to a tenth operation 58 which contacts the network access controller and passes on the client details and desired web address to the network access server 14. The substitution of the web address of the network access server 14 can also be accomplished by any means that leads to the network access server acting as the passage through which contact with the network is controlled and established.

If a second test 60 in the network access server (NAS) 14 detects that the client details, received from the tenth operation 58 in the client 10, are not recognized, control is passed back to the first test 54 to wait for further network access requests. If a second test 60 in the network access server (NAS) 14 detects that the client details, received from the tenth operation 58 in the client 10, are recognized, an eleventh operation 62 passes the client details to the trusted site 16 where a third test 64 checks if the client details are recognized.

If the client details are not recognized by the third test 64 in the trusted site 16, control is passed back to the first test 54 again to await a client 10 network access request. If the client details are recognized by the third test 64 in the trusted site 16, control is passed to a twelfth operation 66 which uses the client details to identify the corresponding trusted site option and to pass the option data back to a thirteenth operation 68 in the network access server 14.

It is not always necessary to pass the identified trusted site option(s) data back to the thirteenth operation 68. If the trusted site option(s) have not changed since last access, the stored content of the trusted site memory 28 can be used, thus speeding up access.

The thirteenth operation 68 acts as a combining engine to combine the restrictions from the client memory 26 and the content of the trusted site memory 28 to impose the combined restrictions upon traffic to and from the client 10.

A fourteenth operation 70 in the network access server 14 checks the desired web address against the combined restrictions. If a fourth test 72 detects that any aspect of the desired web address is not allowed, control is passed to the first test 54 again to await a client 10 access request. If the fourth test 72 detects that the desired web address is allowed, a fifteenth operation 74 in the network access server 14 accesses the desired address from the network 12 and inspects its delivered data.

If a fifth test 76 in the network access server 14 finds that any aspect of the delivered data from the desired website is not acceptable according to the combined restrictions, control is passed to the first test 54 again to await a client 10 network 12 access request. If the fifth test 76 in the network access server 14 finds that acceptable according to the combined restrictions, a sixteenth operation 78 sends the desired web address data to the client 10 and the client 10 is also free to send, through the network access server 14, any data or mail it has to send. Control is then passed back to the first test 54 again to await a client 10 network access request.

The fourteenth 70 to sixteenth 78 operations and the fourth 72 and fifth 72 tests together, in their combination, act as a filtering engine.

The invention has been here before described with reference to combining restrictions from only two sources. It is to be understood that the invention includes combination of restrictions from three or more separate sources.

The invention has been described by way of examples. Those, skilled in the art, will be aware that many different options of order of a activity execution, hardware organization and data and information transfer that can be employed without departing from the invention as claimed hereafter.

The invention is further clarified and defined by the appended claims.

## Claims

1. A system for controlling network content to be accessed by a client, the system, comprising:
the client (10), being operable to make a network access request to a resource in a network 12);
the client (10) being operable to access a network access server (14) in the network (12) to set up a network access profile by selecting from the available network access options, the available network access options including at least one of:
anti malware options;
communications options to avoid;
file types and protocols to avoid;
email addresses to avoid;
websites to avoid; and
type of email not to receive;
the client (10) being operable to access at least one trusted network site (16) in the network to set up at least one trusted site profile, stored on the trusted network site, by selecting from the available trusted site options, the available trusted site options including at least one of:
the identity of network resource identifiers it is permitted to access;
IP ports it is permitted to access; type of content it is permitted to access;
time of day it is permitted to access;
the identity of network resource identifiers it is forbidden to access;
IP ports it is forbidden to access; type of content it is forbidden to access; and
time of day when it is forbidden to access,
the trusted network site (16) and the network access server (14) being in communication with each other;
the client (10) being operable to pass the network access request to the network access server (14);
the network access server (14) comprising a combining engine (20) operable, upon receipt of the network access request, to combine the network access profile with the at least one trusted site profile to form a combined profile;
the network access server (14) also comprising a filtering engine operable to test the network access request and to allow access to the resource through the authorisation of the network access server only if the combined profile is not violated
and
the network access server 14 also comprising a client memory (26), wherein the network access profile is stored in the client memory (26).

2. The system, according to claim 1, further **characterised by** the client server options including anti malware options in the network access server (14) desired by the client (10), or elect to override the malware option and to employ no malware option in the network access server (14) but rather to use anti malware options installed within the client (10) itself.

3. The system, according to any of the preceding claims, further **characterised by**;
the trusted site profile being updatable at the trusted site (16); and
the at least one trusted site profile being transferable from the at least one trusted site (16) to the network access server (14) in response to receipt of a network access request.

4. The system, according to any of the preceding claims, wherein the network access request includes client (10) data enabling identification of the client (10) by the network access server (14).

5. The system, according to claim 4, further **characterised by** the network access server (14) being operable to pass the client (10) data to the at least one trusted site (16), the at least one trusted site (20) being operable to employ the client (10) data to retrieve the associated trusted site profile, and the at least one trusted site (16) being operable to pass the associated trusted site profile to the network access server (14).

6. A method for controlling network resource (18) content access by a client (10) comprising:
a step of accessing, by the client (10), a network access server (14) in the network (12) and establishing, by the client (10), a network access profile stored in a client memory included on the network access server (14) by selecting from the available network access options, the available network access options including at least one of:
anti malware options;
communications options that to avoid;
file types and protocols to avoid;
email addresses to avoid;
websites to avoid; and
type of email not to receive;
a step of accessing, by the client (10), at least one trusted network site (16) in the network (12), the trusted network site (16) and the network access server (14) being in communication with each other, and establishing, by the client (10), at least one trusted site profile stored on the trusted network site (16), by selecting from the available trusted site options, the available trusted site options including at least one of:
the identity of network resource identifiers it is permitted to access;
IP ports it is permitted to access; type of content it is permitted to access;
time of day it is permitted to access;
the identity of network resource identifiers it is forbidden to access;
IP ports it is forbidden to access; type of content it is forbidden to access; and
time of day when it is forbidden to access;
a step of issuing, by the client (10), a network access request to the network access server (14);
a step of the network access server (14) combining the network access profile and the at least one trusted site (16) profile; and
a step of the network access server (14) allowing the network resource access request if and only if the combined profile is not violated.

7. The method, according to claim 6, further **characterized by** comprising:
a step of updating the at least one trusted site (16) profile; and
a step of transferring the at least one trusted site (16) profile from the at least one trusted network site (16) to the network access server (14) in response to receipt of a network access request.

8. The method, according to any of claims 6 and 7, further **characterised by** comprising a step of including client (10) data in the network access request, and a step of identifying, in the network access server 14), the particular client from the client data.

9. The method, according to claim 8, further **characterised by** including
a step of the network access server (14) passing the client (10) data to the at least one trusted network site (16);
a step of the at least one trusted network site (16) employing the client (10) data to retrieve the associated trusted site profile;
and
a step of the at least one trusted network site (16) passing the associated trusted site profile to the network access server (14).

10. The method, according to any one of claims 6 to 9, wherein the trusted site profile includes at least one of: the identity of network resource identifiers it is permitted to access; the identity of IP ports it is permitted to access; type of content it is permitted to access; time of day it is permitted to access; the identity of network resource identifiers it is forbidden to access; IP ports it is forbidden to access; type of content it is forbidden to access; and time of day when it is forbidden to access.

## Patentansprüche

1. Ein System für die Steuerung von Netzwerk-Inhalten, auf die durch einen Client zugegriffen werden soll, das System umfassend:
Der Client (10) ist funktionsbereit, eine Netzwerkzugriff-Anfrage an eine Ressource in einem Netzwerk (12) zu stellen,
der Client (10) ist funktionsbereit, auf einen Netzwerkzugriff-Server (14) in dem Netzwerk (12) zuzugreifen, um ein Netzwerkzugriff-Profil zu erstellen, durch Auswählen der verfügbaren Netzwerkzugriff-Optionen, die verfügbaren Netzwerkzugriff-Optionen beinhalten mindestens eines der folgenden Elemente:
Anti-Malware-Optionen;
zu vermeidende Verbindungsoptionen;
zu vermeidende Dateitypen und Protokolle;
zu vermeidende E-Mail-Adressen;
zu vermeidende Webseiten; und
nicht anzunehmende E-Mail-Typen;
der Client (10) ist funktionsbereit, mindestens auf ein vertrauenswürdiges Netzwerk in dem Netzwerk zuzugreifen, um mindestens ein vertrauenswürdiges Seiten-Profil zu erstellen, das auf der vertrauenswürdigen Netzwerk-Seite (16) gespeichert ist, durch Auswählen aus den verfügbaren vertrauenswürdigen Seiten-Optionen, die verfügbaren vertrauenswürdigen Seiten-Optionen beinhalten mindestens eines der folgenden Elemente:
Die Identität der Netzwerkressourcen-Kennungen, auf die er zugreifen darf;
IP-Ports, auf die er zugreifen darf; Typen von Inhalten, auf die er zugreifen darf;
Uhrzeit, zu der er zugreifen darf;
die Identität der Netzwerkressourcen-Kennungen, auf die er nicht zugreifen darf;
IP-Ports, auf die er nicht zugreifen darf; Typen von Inhalten, auf die er nicht
zugreifen darf; und die Uhrzeit, zu der er nicht zugreifen darf;
die vertrauenswürdige Netzwerk-Seite (16) und der Netzwerkzugriff-Server (14) stehen in Verbindung zueinander;
der Client (10) ist funktionsbereit, eine Netzwerkzugriff-Anfrage an den Netzwerkzugriff-Server (14) zu stellen,
der Netzwerkzugriff-Server (14) umfasst eine Verbindungsengine (20), die funktionsbereit ist, bei Empfang der Netzwerkzugriff-Anfrage, das Netzwerkzugriff-Profil mit dem mindestens einen vertrauenswürdigen Seiten-Profil zu kombinieren, um ein kombiniertes Profil zu bilden;
der Netzwerkzugriff-Server (14) umfasst darüber hinaus eine Filterengine, die funktionsbereit ist, die Netzwerkzugriff-Anfrage zu testen und den Zugriff auf die Ressource durch Autorisierung des Netzwerkzugriff-Servers nur dann zu erlauben, wenn das kombinierte Profil nicht verletzt wird und
der Netzwerkzugriff-Server 14 umfasst darüber hinaus einen Client-Speicher (26), wobei das Netzwerkzugriff-Profil in dem Client-Speicher (26) abgelegt wird.

2. Das System nach Anspruch 1, ferner **dadurch gekennzeichnet, dass** die Client-Server-Optionen Anti-Malware-Optionen in dem Netzwerkzugriff-Server (14) beinhalten, die von dem Client (10) gewünscht werden oder
die ausgewählt werden, um die Malware-Option außer Kraft zu setzen und keine Malware-Option in dem Netzwerkzugriff-Server (14) anzuwenden, sondern stattdessen Anti-Malware-Optionen zu verwenden, die im Client (10) selbst installiert sind.

3. Das System nach einem der vorhergehenden Ansprüche, ferner **gekennzeichnet dadurch, dass**;
das vertrauenswürdige Seiten-Profil auf der vertrauenswürdigen Seite (16) aktualisierbar ist;
und
das mindestens eine vertrauenswürdige Seiten-Profil von der mindestens einen vertrauenswürdigen Seite (16) an den Netzwerkzugriff-Server (14) übertragbar ist, als Reaktion auf den Empfang einer Netzwerkzugriff-Anfrage.

4. Das System nach einem der vorhergehenden Ansprüche, wobei die Netzwerkzugriff-Anfrage Client-Daten (10) beinhaltet, die die Identifikation des Client (10) durch den Netzwerkzugriff-Server (14) ermöglichen.

5. Das System nach Anspruch 4, ferner **gekennzeichnet dadurch, dass**
der Netzwerkzugriff-Server (14) funktionsbereit ist, die Client-Daten (10) an die mindestens eine vertrauenswürdige Seite (16) weiterzuleiten,
dass die mindestens eine vertrauenswürdige Seite (20) funktionsbereit ist, die Client-Daten (10) anzuwenden, um das verbundene vertrauenswürdige Seiten-Profil abzurufen, und
dass die mindestens eine vertrauenswürdige Seite (16) funktionsbereit ist, das verbundene vertrauenswürdige Seiten-Profil an den Netzwerkzugriff-Server (14) weiterzuleiten.

6. Ein Verfahren für die Steuerung des Zugriffs auf die Inhalte einer Netzwerk-Ressource (18) durch einen Client (10), umfassend:
einen Schritt, um durch den Client (10) auf einen Netzwerkzugriff-Server (14) in dem Netzwerk (12) zuzugreifen -und durch den Client (10) ein Netzwerkzugriff-Profil zu erstellen, das in einem Client-Speicher abgelegt wird, der auf dem Netzwerkzugriff-Server (14) vorhanden ist, durch Auswählen aus den verfügbaren Netzwerkzugriff-Optionen, die verfügbaren Netzwerkzugriff-Optionen beinhalten mindestens eines der folgenden Elemente:
Anti-Malware-Optionen;
zu vermeidende Verbindungsoptionen;
zu vermeidende Dateitypen und Protokolle;
zu vermeidende E-Mail-Adressen;
zu vermeidende Webseiten; und
nicht anzunehmende E-Mail-Typen;
einen Schritt, durch den Client (10) auf mindestens eine vertrauenswürdige Netzwerk-Seite (16) in dem Netzwerk (12) zuzugreifen, die vertrauenswürdige Netzwerk-Seite (16) und der Netzwerkzugriff-Server (14) stehen in Verbindung zueinander, und durch den Client (10) mindestens ein vertrauenswürdiges Seiten-Profil zu erstellen, das auf der vertrauenswürdigen Netzwerk-Seite (16) gespeichert ist; durch Auswählen aus den verfügbaren vertrauenswürdigen Seiten-Optionen, die verfügbaren vertrauenswürdigen Seiten-Optionen beinhalten mindestens eines der folgenden Elemente:
Die Identität der Netzwerkressourcen-Kennungen, auf die er zugreifen darf;
IP-Ports, auf die er zugreifen darf; Typen von Inhalten, auf die er zugreifen darf;
Uhrzeit, zu der er zugreifen darf;
die Identität der Netzwerkressourcen-Kennungen, auf die er nicht zugreifen darf;
IP-Ports, auf die er nicht zugreifen darf; Typen von Inhalten, auf die er nicht
zugreifen darf; und die Uhrzeit, zu der er nicht zugreifen darf
einen Schritt, durch den Client (10), eine Netzwerkzugriff-Anfrage an den Netzwerkzugriff-Server (14) zu stellen;
einen Schritt des Netzwerkzugriff-Servers (14), das Netzwerkzugriff-Profil und das mindestens eine vertrauenswürdige Seiten-Profil (16) zu kombinieren, und
einen Schritt des Netzwerkzugriff-Servers (14), die Zugriffanfrage an die Netzwerk-Ressource zu erlauben, wenn, und nur wenn, das kombinierte Profil nicht verletzt wird.

7. Das Verfahren nach Anspruch 6, ferner **gekennzeichnet dadurch, dass** es Folgendes umfasst:
einen Schritt zur Aktualisierung des mindestens einen vertrauenswürdigen Seiten-Profils (16); und
einen Schritt, das mindestens eine vertrauenswürdige Seiten-Profil (16) von der mindestens einen vertrauenswürdigen Seite (16) an den Netzwerkzugriff-Server (14) zu übertragen, als Reaktion auf den Empfang einer Netzwerkzugriff-Anfrage.

8. Das Verfahren nach einem der Ansprüche 6 und 7, ferner **gekennzeichnet dadurch, dass** es Folgendes umfasst;
einen Schritt, Client-Daten (10) in die Netzwerkzugriff-Anfrage einzuschließen, und
einen Schritt, in dem Netzwerkzugriff-Server (14), den bestimmten Client aus den Client-Daten zu identifizieren.

9. Das Verfahren nach Anspruch 8, ferner **gekennzeichnet dadurch, dass** es Folgendes umfasst:
einen Schritt des Netzwerkzugriff-Servers (14) die Client-Daten (10) an die mindestens eine vertrauenswürdige Netzwerk-Seite (16) weiterzuleiten;
einen Schritt der mindestens einen vertrauenswürdigen Netzwerk-Seite (16), die Client-Daten (10) anzuwenden, um das verbundene vertrauenswürdige Seiten-Profil abzurufen;
und
einen Schritt der mindestens einen vertrauenswürdigen Netzwerk-Seite (16), das verbundene vertrauenswürdige Seiten-Profil an den Netzwerkzugriff-Server (14) weiterzuleiten.

10. Das Verfahren nach einem der Ansprüche 6 bis 9, wobei das vertrauenswürdige Seiten-Profil mindestens eines der folgenden Elemente beinhaltet: die Identität der Netzwerkressourcen-Kennungen, auf die es zugreifen darf; die Identität der IP-Ports, auf die es zugreifen darf; Typen von Inhalten, auf die es zugreifen darf; die Uhrzeit, zu der es zugreifen darf; die Identität der Netzwerkressourcen-Kennungen, auf die es nicht zugreifen darf; IP-Ports, auf die es nicht zugreifen darf; Typen von Inhalten, auf die es nicht zugreifen darf; und die Uhrzeit, zu der es nicht zugreifen darf.

## Revendications

1. Système destiné à la commande de contenu de réseau devant être accessible par un client, le système, comprenant :
le client (10), étant utilisable pour faire une demande d'accès au réseau à une ressource dans un réseau (12),
le client (10), étant utilisable pour accéder à un serveur d'accès au réseau (14) dans le réseau (12) pour configurer un profil d'accès au réseau, en sélectionnant les options d'accès au réseau disponibles, les options d'accès au réseau disponibles incluant au moins une parmi :
des options anti-logiciel malveillant ;
des options de communications à éviter ;
des types de fichiers et protocoles à éviter ;
des adresses e-mail à éviter ;
des sites Web à éviter ; et
un type d'e-mail à ne pas recevoir ;
le client (10) étant utilisable pour accéder à au moins un réseau de confiance dans le réseau pour configurer au moins un profil de site de confiance, mémorisé dans le site du réseau de confiance (16), en sélectionnant parmi les options de site de confiance disponibles, les options de site de confiance disponibles incluant au moins une parmi :
l'identité des identificateurs de ressource de réseau auxquels il est autorisé à accéder ;
les ports IP auxquels il est autorisé à accéder ; le type de contenu auquel il est autorisé à accéder ;
le moment de la journée auquel il est autorisé à accéder ;
l'identité des identificateurs de ressource de réseau auxquels il est interdit d'accès ;
les ports IP auxquels il est interdit d'accès ; le type de contenu auquel il est interdit
d'accès ; et le moment de la journée auquel il est interdit d'accès
le site du réseau de confiance (16) et le serveur d'accès au réseau (14) étant en communication les uns avec les autres ;
le client (10) étant utilisable pour passer la demande d'accès au réseau à un serveur d'accès au réseau (14) ;
le serveur d'accès au réseau (14) comprenant un moteur de combinaison (20) utilisable, sur réception de la demande d'accès au réseau, pour combiner le profil d'accès au réseau avec ledit au moins un profil de site de confiance pour former un profil combiné ;
le serveur d'accès au réseau (14) comprenant également un moteur de filtrage utilisable pour tester la demande d'accès au réseau et pour permettre l'accès à la ressource par le biais de l'autorisation du serveur d'accès au réseau uniquement si le profil combiné n'est pas violé et
le serveur d'accès au réseau (14) comprenant également une mémoire de client (26), dans lequel le profil d'accès au réseau est mémorisé dans la mémoire de client (26).

2. Système, selon la revendication 1, **caractérisé en outre par** les options de serveur client incluant les options anti-logiciel malveillant dans le serveur d'accès au réseau (14) désirées par le client (10), ou
choisir d'ignorer l'option de logiciel malveillant et de n'employer aucune option logiciel malveillant dans le serveur d'accès au réseau (14), mais plutôt d'utiliser les options anti-logiciel malveillant installées au sein du client (10) lui-même.

3. Système selon l'une quelconque des revendications précédentes, **caractérisé en outre par** :
le profil de site de confiance pouvant être mis à jour sur le site de confiance (16) ;
et
ledit au moins un site de confiance d'au moins un profil étant transférable à partir dudit au moins un site de confiance (16) au serveur d'accès au réseau (14) en réponse à la réception d'une demande d'accès au réseau.

4. Système, selon l'une quelconque des revendications précédentes, dans lequel la demande d'accès au réseau comprend les données du client (10) permettant l'identification du client (10) par le serveur d'accès au réseau (14).

5. Système selon la revendication 4, **caractérisé par** en outre par
le serveur d'accès au réseau (14) étant utilisable pour passer les données du client (10) audit au moins un site de confiance (16),
ledit au moins un site de confiance (20) étant utilisable pour employer les données du client (10) afin de récupérer le profil du site de confiance associé et
ledit au moins un site de confiance (16) étant utilisable pour passer le profil du site de confiance associé au serveur d'accès au réseau (14) ;

6. Procédé destiné à commander l'accès au contenu de la ressource de réseau (18) par un client (10) comprenant :
une étape d'accès, par le client (10), à un serveur d'accès au réseau (14) dans le réseau (12) et l'établissement par le client (10), d'un profil d'accès au réseau mémorisé dans une mémoire client comprise dans le serveur d'accès au réseau (14) en sélectionnant les options d'accès au réseau, les options d'accès au réseau incluant au moins une parmi :
des options anti-logiciel malveillant ;
des options de communications à éviter ;
des types de fichiers et des protocoles à éviter ;
des adresses e-mail à éviter ;
des sites Web à éviter ; et
un type d'e-mail à ne pas recevoir ;
une étape d'accès, par le client (10), d'au moins un site de réseau de confiance (16) dans le réseau (12), le site du réseau de confiance (16) et le serveur d'accès au réseau (14) étant en communication l'un avec l'autre et l'établissement, par le client (10) d'au moins un profil de site de confiance mémorisé dans le site du réseau de confiance (16), en sélectionnant parmi les options de site de confiance disponibles, les options de site de confiance disponibles incluant au moins une parmi :
l'identité des identificateurs de ressource de réseau auxquels il est autorisé à accéder ;
les ports IP auxquels il est autorisé à accéder ;
le type de contenu auquel il est autorisé à accéder ;
le moment de la journée auquel il est autorisé à accéder ;
l'identité des identificateurs de ressource de réseau auxquels il est interdit d'accès ;
les ports IP auxquels il est interdit d'accès ;
le type de contenu auquel il est interdit d'accès ; et
le moment de la journée auquel il est interdit d'accès
une étape d'émission, par le client (10), d'une demande d'accès au réseau au serveur d'accès au réseau (14) ;
une étape de serveur d'accès au réseau (14), en combinant le profil d'accès au réseau et ledit au moins un profil de site de confiance (16) ; et
une étape de serveur d'accès au réseau (14) permettant la demande d'accès à la ressource de réseau si et seulement si le profil combiné n'est pas violé.

7. Procédé selon la revendication 6, **caractérisé en outre en ce qu'**il comprend :
une étape de mise à jour dudit au moins un profil de site de confiance (16) ; et
une étape de transfert dudit au moins un profil de site de confiance (16) transférable à partir dudit au moins un site de réseau de confiance (16) au serveur d'accès au réseau (14) en réponse à la réception d'une demande d'accès au réseau.

8. Procédé selon l'une quelconque des revendications 6 et 7, **caractérisé en outre en ce qu'**il comprend
une étape d'inclusion des données du client (10) dans la demande d'accès au réseau et
une étape d'identification, dans le serveur d'accès au réseau (14), du client particulier à partir des données client.

9. Procédé selon la revendication 8, **caractérisé en outre en ce qu'**il inclut
une étape du serveur d'accès au réseau (14), passant les données du client (10) audit au moins un site de réseau de confiance (16) ;
une étape dudit au moins un site de réseau de confiance (16) employant les données du client (10) afin de récupérer le profil du site de confiance associé ;
et
une étape dudit au moins un site de réseau de confiance (16) passant le profil du site de confiance associé au serveur d'accès au réseau (14) ;

10. Procédé, selon l'une quelconque parmi les revendications 6 à 9, dans lequel le profil du site de confiance comprend au moins un parmi : l'identité des identificateurs de ressource de réseau auxquels il est autorisé à accéder ; l'identité des ports IP auxquels il est autorisé à accéder ;
le type de contenu auquel il est autorisé à accéder ; le moment de la journée auquel il est autorisé à accéder ; l'identité des identificateurs de ressource réseau auxquels il est interdit d'accès ; les ports IP auxquels il est interdit d'accès ; le type de contenu auquel il est interdit d'accès ; et le moment de la journée auquel il est interdit d'accès.
